# EUROPEAN PATENT APPLICATION

(11) **EP 4 790 763 A1**
(43) Date of publication of application: **12.08.2026**
(21) Application number: 25835172.5
(22) Date of filing: 24.06.2025
(51) Int. Cl.: H01M 4/36, H01M 4/62, H01M 4/58, H01M 10/0525

(54) **LITHIUM IRON PHOSPHATE POSITIVE ELECTRODE MATERIAL AND PREPARATION METHOD THEREFOR, AND LITHIUM-ION BATTERY**

(30) Priority: 28.11.2024 CN 202411719686
(71) Applicant: Guangdong Brunp Recycling Technology Co., Ltd., Foshan, Guangdong 528137 (CN)
(72) Inventor: YU, Haijun, Foshan, Guangdong 528137 (CN); LI, Changdong, Foshan, Guangdong 528137 (CN); WANG, Tao, Foshan, Guangdong 528137 (CN); HUANG, Weiyan, Foshan, Guangdong 528137 (CN)
(74) Representative: LifeTech IP Spies & Behrndt Patentanwälte PartG mbB
(86) International application number: PCT/CN2025/103150
(87) International publication number: WO 2026/113369

(57) **Abstract**

Provided are a lithium iron phosphate cathode material and a preparation method therefor, and a lithium-ion battery, which relate to the technical field of cathode materials. The lithium iron phosphate cathode material includes a matrix and a carbon coating layer coated on a surface of the matrix. A crystal structure factor A of the lithium iron phosphate cathode material satisfies 4.600 Å⁻⁴ ≤ A ≤ 9.500 Å⁻⁴. The calculation formula of the crystal structure factor A is: $A = \frac{C \times {10}^{5}}{D \left(010\right) \times V}$; wherein C is a crystallinity of the crystal; V is a unit cell volume; D (010) is a grain size of a crystal plane D (010), with a value satisfying 4 Å ≤ D(010) ≤ 9 Å. Lithium iron phosphate cathode materials that meet the above range have excellent low-temperature electrochemical properties.

## Description

### CROSS-REFERENCE TO RELATED APPLICATION

The present disclosure claims priority of Chinese patent application No. 202411719686.X filed to the China National Intellectual Property Administration on November 28, 2024, entitled "LITHIUM IRON PHOSPHATE CATHODE MATERIAL AND PREPARATION METHOD THEREFOR, AND LITHIUM-ION BATTERY", the entire contents of which are incorporated herein by reference.

### TECHNICAL FIELD

The present disclosure relates to the technical field of cathode materials, and in particular, to a lithium iron phosphate cathode material and a preparation method therefor, and a lithium-ion battery.

### BACKGROUND

Lithium iron phosphate is one of the most competitive cathode active materials for lithium-ion batteries currently available on the market. Compared with lithium cobalt oxide and ternary cathode materials, it has a long service life and excellent safety performance. In addition, lithium iron phosphate has a theoretical specific capacity of 170 mAh·g⁻¹ and a plateau discharge voltage of 3.4 V, thus exhibiting considerable energy density.

LiFePO₄ with an olivine-type structure has a Pbnm-type space group. In the LiFePO₄ crystal, oxygen atoms are arranged in a slightly distorted hexagonal close packing. Phosphorus atoms occupy the 4c positions of oxygen tetrahedrons to form PO₄ tetrahedrons, while Fe and Li are located at the centers of oxygen octahedrons to form FeO₆ and LiO₆ octahedrons, respectively. On the bc plane, adjacent FeO₆ octahedrons share one oxygen atom and are linked to each other to form a Z-shaped FeO₆ layer. Between the FeO₆ layers, adjacent LiO₆ octahedrons are linked through two oxygen atoms along the b-direction, forming continuous linear chains of Li parallel to the c-axis. This structure enables two-dimensional diffusion of Li⁺. Structurally, PO₄ tetrahedrons are located between FeO₆ layers, which hinders the diffusion of Li⁺ to some extent. Meanwhile, adjacent FeO₆ octahedrons are connected via shared vertices, and there is no coplanar octahedron structure, resulting in low electrical conductivity. Furthermore, due to the above crystal structure of LiFePO₄, the low-temperature capacitance, rate performance, and other properties of LiFePO₄-based batteries are inferior to those of ternary cathode material-based batteries, as the Li⁺ deintercalation reaction becomes more difficult under low-temperature conditions.

To improve the lithium ion diffusion rate and electrical conductivity of LiFePO₄, extensive research has been conducted on the nanosizing and carbon coating of LiFePO₄ using traditional methods. To enhance the low-temperature service performance of lithium iron phosphate batteries, the current commercial solution is to install a self-heating system in the power unit to insulate or heat the battery. However, there are few research reports on improving the low-temperature electrochemical properties of LiFePO₄ batteries by adjusting the crystal structure of LiFePO₄.

In view of this, the present disclosure is hereby provided.

### SUMMARY

An objective of the present disclosure is to provide a lithium iron phosphate cathode material and a preparation method therefor, and a lithium-ion battery.

To achieve the above objective, the following technical solutions are used herein.

In a first aspect, the present disclosure provides a lithium iron phosphate cathode material, which includes a matrix and a carbon coating layer coated on a surface of the matrix, wherein a crystal structure factor A of the lithium iron phosphate cathode material satisfies 4.600 Å⁻⁴ ≤ A ≤ 9.500 Å⁻⁴, and a calculation formula of the crystal structure factor A is: $A = \frac{C \times {10}^{5}}{D \left(010\right) \times V} ;$
wherein C is a crystallinity of the lithium iron phosphate cathode material, and the crystallinity is measured by a ratio of a XRD diffraction peak intensity of a crystal plane (311) to an integral area of a diffraction peak;
V is a unit cell volume of the lithium iron phosphate cathode material in a unit of Å³; and
*D*(010) is a grain size of a crystal plane *D*(010) of the lithium iron phosphate cathode material in a unit of Å, with a value satisfying 4 Å ≤ D(010) ≤ 9 Å.

In an optional embodiment, the lithium iron phosphate cathode material satisfies at least one of the following features (1) to (3):
feature (1): a value of *D*(010) satisfies 4 Å ≤ D(010) ≤ 6 Å;
feature (2): a value of C satisfies 0.0900 ≤ C ≤ 0.1200; or
feature (3): a value of V satisfies 290 Å³ ≤ V ≤ 292 Å³.

In an optional embodiment, a general formula of the matrix is as follows: Li₁₋ₓAₓFe_{1-y}M_{y}(PO_{4-z})D_{z}, wherein A is at least one selected from the group consisting of Na and Mg; M is at least one selected from the group consisting of Al, Ni, Co, Mn, Ti, La, Ce, Cr, Mo, Ca, Ga, V, Nb, Zr, In, Zn and Y; D is at least one selected from the group consisting of F, S, N and Cl; 0 ≤ x ≤ 0.1; 0 ≤ y ≤ 0.1; and 0 ≤ z ≤ 0.1.

In an optional embodiment, a mass of the carbon coating layer is 0.5%-5% of a mass of the lithium iron phosphate cathode material.

In a second aspect, the present disclosure provides a method for preparing a lithium iron phosphate cathode material, which includes:
stirring a mixture of lithium carbonate, a divalent iron source, a phosphorus source, and an ethylene glycol compound solution for reaction to obtain a precursor suspension;
subjecting the precursor suspension to a hydrothermal reaction and solid-liquid separation to obtain a solid precursor; and
mixing the solid precursor with a carbon source, drying a resulting mixture, and calcining a dried mixture under an inert atmosphere to obtain the lithium iron phosphate cathode material.

In an optional embodiment, a process of preparing the precursor suspension includes at least one of the features (4) to (9):
feature (4): the divalent iron source is at least one selected from the group consisting of ferrous sulfate, ferrous chloride, ferrous nitrate, ferrous oxalate and ferrous acetate;
feature (5): the phosphorus source is at least one selected from the group consisting of phosphoric acid, sodium dihydrogen phosphate, sodium monohydrogen phosphate, ammonium dihydrogen phosphate and ammonium monohydrogen phosphate;
feature (6): a mass percentage of an ethylene glycol compound in the ethylene glycol compound solution is 5% to 20%;
feature (7): the ethylene glycol compound is a water-soluble compound having an ethylene glycol structure, and the ethylene glycol compound is at least one selected from the group consisting of 1,2-ethylene glycol, squaric acid, crotonic acid, sodium crotonate, 2,3-dihydroxycyclopent-2-ene-1-one, 2,3-dihydroxy-4-(hydroxymethyl)cyclopent-2-ene-1-one and 3,4-dihydroxy-5-methyl-2-furanone;
feature (8): a pH of the solution in the reaction under stirring is 1-2.5, a reaction temperature is 80-90 °C, a reaction time is 1-4 h, and a stirring speed is 300-800 rpm; or
feature (9): after the reaction under stirring is completed, the method further comprises cooling to 10-25 °C and stirring until no bubbles are generated.

In an optional embodiment, an M source is further added during a preparation of the mixture, which includes at least one of the features (10) to (13):
feature (10): the divalent iron source and the M source are dissolved in the ethylene glycol compound solution to form a metal salt solution, and the phosphorus source is dissolved in water to form a phosphorus source solution; the lithium carbonate is dispersed in the metal salt solution to obtain a dispersion, and then added with the phosphorus source solution to obtain the mixture; wherein a molar concentration of a metal element in the metal salt solution is 0.8 M to 1.5 M, and a molar concentration of the phosphorus source in the phosphorus source solution is 0.85 M to 3 M;
feature (11): a ratio of a total molar amount of the divalent iron source and the M source to a molar amount of the phosphorus source is 1:1.05 - 1.5;
feature (12): a ratio of the total molar amount of the divalent iron source and the M source to a molar amount of a lithium element in the lithium carbonate is 1:1.01-1.1; or
feature (13): the M source includes a water-soluble salt of at least one element selected from the group consisting Al, Ni, Co, Mn, Ti, La, Ce, Cr, Mo, Ca, Ga, V, Nb, Zr, In, Zn and Y.

In an optional embodiment, the conditions of the hydrothermal reaction during a preparation of the solid precursor are as follows: a temperature is 160-200 °C, a period of time is 1-3 h, and a stirring speed is 100-300 rpm.

In an optional embodiment, the step of mixing the solid precursor with the carbon source, drying the resulting mixture, and calcining the dried mixture under an inert atmosphere includes at least one of the following features (14) to (17):
feature (14): a mass ratio of the solid precursor to the carbon source is 1:0.04- 0.1;
feature (15): the carbon source is at least one selected from the group consisting of glucose, starch, phenolic resin, sucrose, cellulose, polyethylene glycol and citric acid;
feature (16): the mixing process further includes adding an A source and/or a D source, wherein the A source is at least one selected from the group consisting of magnesium fluoride, sodium fluoride, sodium chloride and sodium sulfide; the D source is at least one selected from the group consisting of potassium fluoride, magnesium fluoride, sodium fluoride, ammonium fluoride, lithium fluoride, melamine, amino acid, trithiocyanuric acid, thiourea, elemental sulfur, sodium sulfide, ammonium sulfide, sodium chloride, ammonium chloride, lithium chloride and urea; or
feature (17): the calcining includes calcining at 550-650 °C for 4-8 hours.

In a third aspect, a lithium-ion battery is provided, which includes the lithium iron phosphate cathode material as described in any one of the aforementioned embodiments or the lithium iron phosphate cathode material prepared by the method for preparing the lithium iron phosphate cathode material as described in any one of the aforementioned embodiments.

The present disclosure has the following beneficial effects.
(1) The present disclosure provides a lithium iron phosphate cathode material whose crystal structure factor A satisfies 4.600 Å⁻⁴ ≤ A ≤ 9.500 Å⁻⁴ and whose grain size D(010) satisfies 4 Å ≤ D(010) ≤ 9 Å. The lithium iron phosphate cathode material satisfying the above ranges exhibits excellent low-temperature electrochemical properties. The crystal structure factor comprehensively evaluates three indicators of the lithium iron phosphate cathode material: crystallinity C, unit cell volume V, and grain size D(010) of the crystal plane (010). Among them, the higher the crystallinity C, the fewer internal defects in the material and the higher the lithium ion diffusion rate; the smaller the unit cell volume, the shorter the lithium ion deintercalation channel is, and the easier the lithium ion to transition, which is beneficial to improving the cycle performance; the smaller D(010) is, the more conducive it is to shorten the diffusion channel of lithium ions and improve the charge-discharge capacity and rate performance. Although crystallinity C, unit cell volume V, and grain size D(010) each affect the performance of the lithium iron phosphate cathode material, it is practically difficult to obtain a cathode material with optimal performance in all three aspects. Therefore, the present disclosure provides a crystal structure factor A to comprehensively evaluate the three aspects of the lithium iron phosphate cathode material. The lithium iron phosphate cathode material that satisfies 4.600 Å⁻⁴ ≤ A ≤ 9.500 Å⁻⁴ and 4 Å ≤ D(010) ≤ 9 Å simultaneously exhibits excellent low-temperature electrochemical properties.
(2) The method for preparing the lithium iron phosphate cathode material provided in the present disclosure can produce a lithium iron phosphate cathode material with D(010) in the range of 4 Å - 6 Å and high crystallinity.

### BRIEF DESCRIPTION OF DRAWINGS

In order to illustrate the technical solutions of the embodiments of the present disclosure more clearly, the accompanying drawings required for the embodiments will be briefly described below. It should be understood that the following drawings only show some embodiments of the present disclosure and should not be regarded as limiting the scope. For those of ordinary skill in the art, other relevant drawings can be obtained based on these accompanying drawings without creative efforts.
Figure 1 is a schematic diagram showing the comparison of XRD patterns of lithium iron phosphate cathode materials in Example 3, Example 5, Comparative Example 1 and Comparative Example 2 of the present disclosure with those of a standard card; and
Figure 2 is an SEM image of the lithium iron phosphate cathode materials prepared in Example 3 (A) and Comparative Example 1 (B) of the present disclosure.

### DETAILED DESCRIPTION

In order to make the objectives, technical solutions and advantages of the embodiments of the present disclosure more clear, the technical solutions in the embodiments of the present disclosure will be clearly and completely described below. For the embodiments where specific conditions are not indicated, the experiments are conducted under conventional conditions or conditions recommended by the manufacturer. The reagents or instruments used without indicating the manufacturer are conventional products that can be purchased from the market.

The present disclosure provides a lithium iron phosphate cathode material, which includes a matrix and a carbon coating layer coated on a surface of the matrix, wherein a crystal structure factor A of the lithium iron phosphate cathode material satisfies 4.600 Å⁻⁴ ≤ A ≤ 9.500 Å⁻⁴, and a calculation formula of the crystal structure factor A is: $A = \frac{C \times {10}^{5}}{D \left(010\right) \times V} ;$
wherein C is a crystallinity of the lithium iron phosphate cathode material, and the crystallinity is measured by a ratio of a XRD diffraction peak intensity of a crystal plane (311) to an integral area of a diffraction peak;
V is a unit cell volume of the lithium iron phosphate cathode material in a unit of Å³; and
*D*(010) is a grain size of a crystal plane *D*(010) of the lithium iron phosphate cathode material in a unit of Å, with a value satisfying 4 Å ≤ D(010) ≤ 9 Å.

In the present disclosure, the lithium iron phosphate cathode material is used as a sample for X-ray diffraction (XRD) testing. The Cu Kα2 background is subtracted using JADE software, and the XRD pattern is obtained after full-spectrum fitting and refinement. The crystallinity C, unit cell volume V, and D(010) are obtained from the XRD pattern, and the crystal structure factor A is calculated. Samples where the crystal structure factor A satisfies 4.600 Å⁻⁴ ≤ A ≤ 9.500 Å⁻⁴ and the grain size D(010) satisfies 4 Å ≤ D(010) ≤ 9 Å are selected as the lithium iron phosphate cathode material of the present disclosure. The lithium iron phosphate cathode material satisfying the above ranges exhibits excellent low-temperature electrochemical properties. Here, Å (angstrom) is a length unit commonly used in chemistry and crystallography, wherein 1 Å = 10⁻¹⁰ meter = 0.1 nanometer, which is on the order of the diameter of a hydrogen atom or the length of a typical chemical bond.

C is the crystallinity of the lithium iron phosphate cathode material. The crystallinity C of the lithium iron phosphate cathode material is measured by a ratio of a diffraction peak intensity of a largest diffraction peak ((311) crystal plane) in a XRD spectrum to an integral area of the diffraction peak, and a corresponding 2θ is 34.8-35.8°.

Further, the diffraction peak intensity and the integral area of the diffraction peak can reflect the sharpness of the diffraction peak. At the same intensity, the smaller the integral area, the sharper the diffraction peak is. Similarly, the stronger the peak intensity under the same integral area, the sharper the diffraction peak is; the sharper the diffraction peak, the higher the crystallinity is; the higher the crystallinity, the higher the lithium ion diffusion rate is and the better the conductivity is. The value of C satisfies 0.0900 ≤ C ≤ 0.1200. Theoretically, a higher C is better, but 0.12 is the maximum value obtained in the present disclosure.

V is the unit cell volume of the lithium iron phosphate cathode material. The unit cell is the basic unit of the crystal structure, which describes the arrangement of atoms or molecules in the crystal. The smaller the unit cell volume, the shorter the Li⁺ deintercalation channel is, which facilitates Li⁺ hopping and improves the electrical conductivity and cycling performance of the material. The unit cell volume is generally related to the crystal form and chemical composition. The value of V satisfies 290 Å³ ≤ V ≤ 292 Å³. An excessively small unit cell volume will lead to poor structural stability and reduced cycling performance of the cathode material.

D(010) is the grain size of the crystal plane (010) of the lithium iron phosphate cathode material in a unit of Å. D(010) is calculated using the Scherrer formula based on the diffraction angle (θ) and the full width at half maximum (β) of the diffraction peak of the (010) crystal plane. The Scherrer formula is: $D = \frac{kλ}{β \times cosθ}$, where k is a constant with a value of 0.9, λ is the wavelength of the incident ray, β is the full width at half maximum of the diffraction peak (unit: rad), and θ is the diffraction angle (unit: °). The grain size can reflect the macroscopic size of the crystal, where D = n × d , d is the interplanar spacing of the crystal plane, and n is the number of crystal layers. A smaller D(010) means fewer crystal layers and/or a smaller interplanar spacing of a corresponding crystal plane, resulting in a plate-like crystal shape. A smaller D(010) indicates that the growth of the crystal along the b-axis is restricted, and the crystal grows along the ac crystal plane. Since Li⁺ diffuses along the b-axis, this is conducive to shortening the lithium ion diffusion channel and improving electrical conductivity. In the present disclosure, the value of D(010) satisfies 4 Å ≤ D(010) ≤ 9 Å. Theoretically, a smaller D(010) is more beneficial to improving the electrochemical properties of the material. However, an excessively small D(010) is not only technically difficult to achieve but also causes the plate-like crystals to be easily broken during electrode preparation or use, leading to unstable performance and a tendency to pierce the separator. Optionally, the value of D(010) satisfies 4 Å ≤ D(010) ≤ 6 Å.

The present disclosure defines the crystal structure factor A of the lithium iron phosphate cathode material. The lithium iron phosphate cathode material satisfying 4.600 Å⁻⁴ ≤ A ≤ 9.500 Å⁻⁴ exhibits excellent low-temperature electrochemical properties, which is related to the lithium ion diffusion rate of the lithium iron phosphate at a low temperature.

In other embodiments of the present disclosure, the value of the crystal structure factor A may be, for example, any value or within any range between any two values of 4.600 Å⁻⁴, 5.200 Å⁻⁴, 5.800 Å⁻⁴, 6.800 Å⁻⁴, 7.500 Å⁻⁴, 8.500 Å⁻⁴, 9.000 Å⁻⁴, or 9.500 Å⁻⁴. The value of crystallinity C may be, for example, any value or within any range between any two values of 0.0900, 0.1000, 0.1100, or 0.1200. The value of unit cell volume V may be, for example, any value or within any range between any two values of 290 Å³, 291 Å³, or 292 Å³. The value of D(010) may be, for example, any value or within any range between any two values of 4 Å, 5 Å, 6 Å, 7 Å, 8 Å, or 9 Å.

Further, a general formula of the matrix is Li₁₋ₓAₓFe_{1-y}M_{y}(PO_{4-z})D_{z}, where A is at least one selected from the group consisting of Na and Mg; M is at least one selected from the group consisting of Al, Ni, Co, Mn, Ti, La, Ce, Cr, Mo, Ca, Ga, V, Nb, Zr, In, Zn and Y; D is at least one selected from the group consisting of F, S, N and Cl; 0 ≤ x ≤ 0.1; 0 ≤ y ≤ 0.1 and 0 ≤ z ≤ 0.1. Doping with the A source, D source, and/or M source can improve various properties of lithium iron phosphate, including electrochemical properties, hardness, morphology, particle size, and particle size distribution.

Further, a mass of the carbon coating layer is 0.5%-5% of a mass of the lithium iron phosphate cathode material, for example, it can be any value or within any range between any two values of 0.5%, 0.8%, 1%, 1.1%, 1.2%, 1.3%, 1.4%, 1.5%, 2%, 2.5%, 3%, 3.5%, 4%, 4.5%, and 5%. Optionally, in some embodiments, the mass of the carbon coating layer is 1.1%-1.5% of the mass of the lithium iron phosphate cathode material.

In addition, the present disclosure also provides a typical but non-limiting method for preparing the aforementioned lithium iron phosphate cathode material, which includes the following steps.

S1, a mixture of lithium carbonate, a divalent iron source, a phosphorus source, and an ethylene glycol compound solution is stirred for reaction to obtain a precursor suspension.

The divalent iron source includes but is not limited to at least one of ferrous sulfate, ferrous chloride, ferrous nitrate, ferrous oxalate and ferrous acetate; the phosphorus source includes but is not limited to at least one of phosphoric acid, sodium dihydrogen phosphate, sodium monohydrogen phosphate, ammonium dihydrogen phosphate, and ammonium monohydrogen phosphate. The ethylene glycol compound is a water-soluble compound containing an ethylene glycol structure in the molecular structure. Further, the ethylene glycol structure is OH-C=C-OH; and the ethylene glycol compound includes but is not limited to at least one of 1,2-ethylene glycol, squaric acid, crotonic acid, sodium crotonate, 2,3-dihydroxycyclopent-2-en-1-one, 2,3-dihydroxy-4-(hydroxymethyl)cyclopent-2-en-1-one, and 3,4-dihydroxy-5-methyl-2-furanone. A mass percentage of the ethylene glycol compound in the ethylene glycol compound solution is 5%-20%, and the solvent is water.

In the present disclosure, the mixture is stirred for reaction at a pH of 1-2.5, at a temperature of 80-90 °C for 1-4 h, and at a stirring speed of 300-800 rpm. After the completion of the reaction under stirring, the reaction product is cooled to 10-25 °C and stirred until no bubbles are generated. In other embodiments of the present disclosure, the pH of the reaction under stirring may be, for example, any value or within any range between any two values of 1, 1.5, 2, or 2.5; the temperature may be, for example, any value or within any range between any two values of 80 °C, 82 °C, 85 °C, 88 °C, or 90 °C; the reaction time may be, for example, any value or within any range between any two values of 1 hour, 2 hours, 3 hours, or 4 hours; the stirring speed may be, for example, any value or within any range between any two values of 300 rpm, 400 rpm, 500 rpm, 600 rpm, 700 rpm, or 800 rpm.

In the present disclosure, lithium carbonate is used as a lithium source and mixed with the divalent iron source, the phosphorus source, and the ethylene glycol compound solution, and then reacted under stirring at a relatively low temperature (80-90 °C) and a low pH (1-2.5). The phosphate ions in the phosphorus source react with divalent iron ions to form unstable ferrous phosphate precipitates (with simultaneous precipitation and dissolution). Meanwhile, lithium carbonate reacts with acid to release Li⁺ and carbon dioxide gas, forming tiny bubbles. The rupture of these bubbles causes local supersaturation of precipitated ions (Fe²⁺, Li⁺, PO₄³⁻), promoting the primary nucleation of lithium iron phosphate precipitates, thereby shortening the hydrothermal reaction time and reducing the hydrothermal reaction temperature. The ethylene glycol compound acts as both an antioxidant and a chelating agent for divalent iron ions, preventing the oxidation of divalent iron ions to trivalent iron ions during the reaction under stirring. Compared with saturated polyols (such as ethylene glycol used in traditional methods), the ethylene glycol compound has a stronger chelating effect on divalent iron ions because its hydroxyl groups are connected to unsaturated carbon atoms. This has a more significant effect on slowing down the crystal growth rate, thereby greatly improving the crystallinity. In addition, the ethylene glycol compound has lower water solubility than saturated polyols such as ethylene glycol, so it tends to chelate with divalent iron ions and adsorb on the crystal surface to regulate the crystal morphology.

Further, a doping element M source may be added to the mixture, and the M source includes a water-soluble salt of at least one element selected from the group consisting of Al, Ni, Co, Mn, Ti, La, Ce, Cr, Mo, Ca, Ga, V, Nb, Zr, In, Zn, and Y.

As an optional preparation method disclosed herein, first, a divalent iron source and an M source are dissolved in an ethylene glycol compound solution to form a metal salt solution; a phosphorus source is dissolved in water to form a phosphorus source solution; and lithium carbonate is dispersed in the metal salt solution to obtain a dispersion, and then added with the phosphorus source solution to obtain a mixture.

Optionally, a molar concentration of a metal element in the metal salt solution is 0.8-1.5M, and a ratio of the divalent iron source and a M source in the metal salt solution is added according to a ratio of an iron element and a M element in a general formula of the matrix: Li₁₋ₓAₓFe_{1-y}M_{y}(PO_{4-z})D_{z}.

Optionally, a molar concentration of the phosphorus source in the phosphorus source solution is 0.85-3 M, and a ratio of a total molar amount of the divalent iron source and a M source to a molar amount of the phosphorus source is 1:1.05-1.5.

Optionally, a ratio of a total molar amount of the divalent iron source and the M source to a molar amount of a lithium element in the lithium carbonate is 1:1.01-1.1.

S2, the precursor suspension is subjected to a hydrothermal reaction and solid-liquid separation to obtain a solid precursor.

The conditions for the hydrothermal reaction in the process of preparing the solid precursor are: a temperature is 160-200 °C, a period of time is 1-3 h, and a stirring speed is 100-300 rpm. In other embodiments of the present disclosure, the temperature of the hydrothermal reaction can be, for example, any value or within any range between any two values of 160 °C, 170 °C, 180 °C, 190 °C, or 200 °C; the period of time may be any value or within any range between any two values of 1 hour, 2 hours, or 3 hours; the stirring speed may be any value or within any range between any two values of 100 rpm, 200 rpm, or 300 rpm.

During the hydrothermal reaction, the chelation effect of the ethylene glycol compound on the divalent iron ions can, on the one hand, reduce the diffusion rate of the divalent iron ions, inhibit the orderly arrangement of the ions, and thus slow down the crystal growth rate, resulting in lithium iron phosphate crystals with higher crystallinity; on the other hand, the ethylene glycol compound combines with the divalent iron ions arranged on the (010) crystal plane of lithium iron phosphate and is adsorbed on the crystal plane, inhibiting the growth of the crystal plane, thereby obtaining lithium iron phosphate crystals with a (010) crystal plane orientation.

S3, the solid precursor is mixed with a carbon source, dried, and calcinated under an inert atmosphere to obtain the lithium iron phosphate cathode material.

A mass ratio of the solid precursor to the carbon source is 1:0.04-0.1; the carbon source is at least one selected from the group consisting of glucose, starch, phenolic resin, sucrose, cellulose, polyethylene glycol and citric acid. During the mixing process, a doping element A source and/or D source may be added, wherein the A source is at least one selected from the group consisting of magnesium fluoride, sodium fluoride, sodium chloride and sodium sulfide; the D source is at least one selected from the group consisting of potassium fluoride, magnesium fluoride, sodium fluoride, ammonium fluoride, lithium fluoride, melamine, amino acid, trithiocyanuric acid, thiourea, elemental sulfur, sodium sulfide, ammonium sulfide, sodium chloride, ammonium chloride, lithium chloride and urea.

The purpose of calcination is to further improve the crystallinity of lithium iron phosphate and introduce a carbon coating layer, thereby improving the electrical conductivity. The calcination is performed at a temperature of 550-650 °C for 4-8 h.

The method for preparing the lithium iron phosphate cathode material provided in the present disclosure can prepare a lithium iron phosphate cathode material with D(010) in a range of 4 Å - 6 Å and high crystallinity. The lithium iron phosphate cathode material with D(010) outside the range of 4 Å - 6 Å but satisfying 4.600 Å⁻⁴ ≤ A ≤ 9.500 Å⁻⁴ also exhibit good electrochemical properties. Therefore, it is not necessary to use the preparation method provided by the present disclosure to prepare a product that can solve the technical problem.

The lithium iron phosphate cathode material may be widely used in the preparation of batteries, and the prepared batteries have excellent electrochemical properties. In this regard, the present disclosure also provides a lithium-ion battery, which includes the aforementioned lithium iron phosphate cathode material.

The features and performance of the present disclosure are further described in detail below with reference to embodiments.

The present disclosure provided lithium iron phosphate cathode materials as shown in Table 1 and Table 2, and performed X-ray diffraction (XRD) testing, chemical composition analysis, tapped density testing, specific surface area testing, and particle size testing, etc.

The test methods were as follows:
(1) XRD: An X-ray powder diffractometer (XRD, Rigaku D/max-2600PC) was used to study the crystal phase and crystal structure of the material. During the test, Cu Kα radiation was used (wavelength λ = 0.154056 nm), with a voltage of 40 kV and a current of 40 mA. The scanning range of 2θ was 10° to 80°. The XRD test results were analyzed using Jade 6 software, with full-spectrum fitting and refinement (R_{wp} ≤ 10%, where R_{wp} was the weighted profile R-factor, ensuring refinement accuracy).
(2) Chemical composition analysis: The chemical composition analysis was performed using an inductively coupled plasma optical emission spectrometer (ICP-OES, PE Avio200).
(3) Tap density (TD): The tap density was determined in accordance with GB/T 21354-2008 "Determination of Tap Density of Powder Products".
(4) BET determination of specific surface area: The BET specific surface area was performed in accordance with GB/T 21650.2-2008 "Pore size distribution and porosity of solid materials by mercury porosimetry and gas adsorption - Part 2: Analysis of mesopores and macropores by gas adsorption". The powdered samples were tested using an Autosorb IQ2 fully automatic specific surface area and pore size analyzer to obtain nitrogen adsorption-desorption curves at a constant temperature of -196 °C and a pressure range of 0.005 MPa to 0.100 MPa. The data at the medium and low pressure stages were processed using the BET formula to calculate the specific surface area.
(5) Particle size Dv(50): The particle size Dv(50) was tested using an MS3000 laser particle size analyzer.

The test results are provided in Tables 1 and 2.

**Table 1 Statistics of crystal structure test results of different materials**

| | C | V, Å³ | D(010), Å | A, Å⁻⁴ |
|---|---|---|---|---|
| Example 1 | 0.1167 | 290.22 | 4.24 | 9.4837 |
| Example 2 | 0.1014 | 290.34 | 7.14 | 4.8914 |
| Example 3 | 0.1117 | 291.5 | 5.22 | 7.3408 |
| Example 4 | 0.1023 | 291.48 | 5.98 | 5.8690 |
| Example 5 | 0.0985 | 290.84 | 7.21 | 4.6973 |
| Example 6 | 0.1009 | 290.82 | 5.95 | 5.8311 |
| Example 7 | 0.1053 | 291.77 | 6.00 | 6.0150 |
| Example 8 | 0.0841 | 292.20 | 6.22 | 4.6273 |
| Comparative Example 1 | 0.0844 | 292.34 | 6.87 | 4.2024 |
| Comparative Example 2 | 0.1062 | 291.89 | 9.2 | 3.9547 |
| Comparative Example 3 | 0.0962 | 291.75 | 8.44 | 3.9068 |

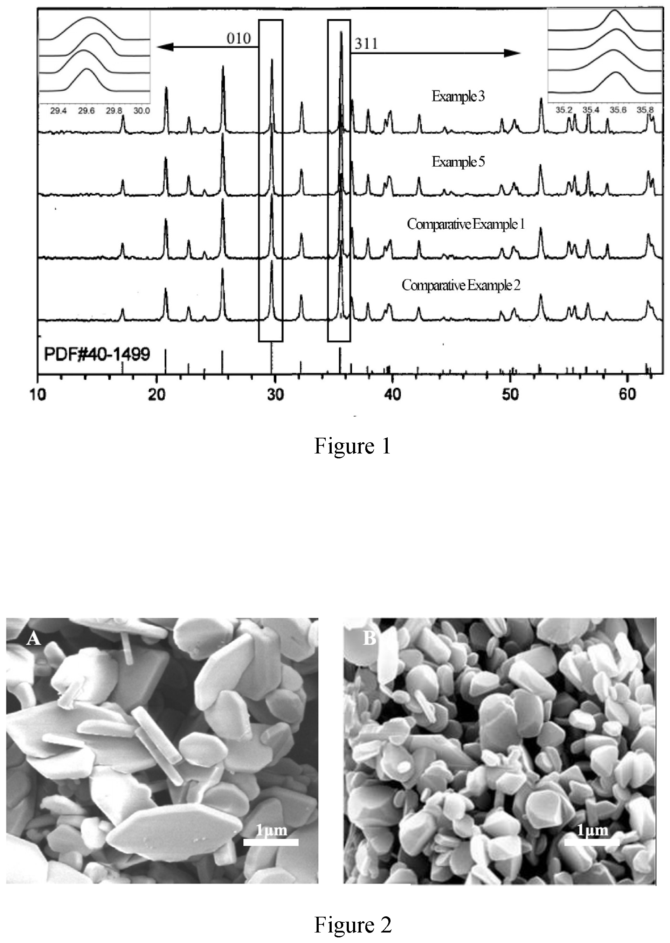

Figure 1 shows the XRD patterns of the lithium iron phosphate cathode materials in Example 3, Example 5, Comparative Example 1, and Comparative Example 2, and an enlarged view of the diffraction peaks of the (010) and (311) crystal planes. Comparison with the standard card shows that LiFePO₄ was successfully synthesized in the present disclosure. In addition, the diffraction peaks of the (010) and (311) crystal planes were analyzed and calculated according to the method described in the present disclosure to obtain the crystal structure factor A.

Figure 2 shows a scanning electron microscopy (SEM) image of the lithium iron phosphate cathode materials prepared in Example 3 (A) and Comparative Example 1 (B). As shown in the figure, the lithium iron phosphate cathode material prepared in Example 3 has flake morphology, while Comparative Example 2 has an irregular particle morphology. The morphologies of the two samples are consistent with the tested D(010), indicating that the lithium iron phosphate cathode material prepared in Example 3 has a (010) crystal plane orientation.

**Table 2 Statistics of composition and performance test results of different samples**

| | Chemical Formula | Carbon Content (wt%) | TD (g/cm³) | BET (m²/g) | Dv(50) (µm) |
|---|---|---|---|---|---|
| Example 1 | LiFe_{0.988}Ti_{0.012}PO₄ | 1.33 | 0.92 | 13.2 | 1.12 |
| Example 2 | LiFe_{0.988}Ti_{0.012}PO₄ | 1.38 | 0.88 | 12.5 | 1.17 |
| Example 3 | LiFePO₄ | 1.28 | 0.85 | 11.3 | 1.18 |
| Example 4 | LiFePO₄ | 1.35 | 0.92 | 11.8 | 1.12 |
| Example 5 | LiFePO₄ | 1.32 | 0.87 | 11.4 | 1.13 |
| Example 6 | LiFe_{0.986}Cr_{0.014}PO₄ | 0.57 | 1.1 | 13.8 | 0.94 |
| Example 7 | Li_{0.998}Na_{0.002}Fe_{0.989}Mn _{0.011}PO_{3.998}F_{0.002} | 1.96 | 0.96 | 11.7 | 1.15 |
| Example 8 | LiFePO₄ | 1.31 | 0.99 | 11.7 | 1.19 |
| Comparative Example 1 | LiFePO₄ | 1.29 | 0.74 | 13.4 | 0.425 |
| Comparative Example 2 | LiFePO₄ | 1.31 | 0.62 | 10.1 | 1.22 |
| Comparative Example 3 | LiFePO₄ | 1.29 | 0.92 | 11.5 | 1.15 |

Electrochemical testing was conducted on the lithium iron phosphate cathode materials provided in the above examples and comparative examples.

Battery Assembly: A uniform slurry was prepared by mixing the cathode material, acetylene black, and polyvinylidene fluoride (PVDF) at a mass ratio of 75:15:10, and uniformly coated on an aluminum foil substrate to serve as the cathode of the simulated battery. The simulated battery comprised a lithium sheet served as an anode, a polypropylene porous membrane served as a separator, and 1 mol/L LiPF₆ dissolved in a mixed solvent of EC and DMC (volume ratio 1:1) served as an electrolytic solution. The cathode, anode, electrolytic solution, and separator were assembled into a battery in a glove box under argon protection.

Normal-Temperature Electrochemical property: At 25 °C, charge-discharge cycling was performed at a rate of 0.1C for 1 cycle (i.e., 1 charge-discharge cycle) to obtain the 0.1C discharge capacity (at 25 °C). Then, charge-discharge cycling performance testing was conducted at a rate of 1C for 200 cycles to obtain the 1C discharge capacity (at 25 °C) in the first cycle and the 1C discharge capacity (at 25 °C) in the 200th cycle, and the capacity retention rate was calculated based on these values.

Low-temperature electrochemical properties include low-temperature discharge rate and low-temperature direct current resistance (DCR) growth rate.

Low-temperature DCR growth rate test: At 25 °C, charge-discharge cycling was performed at a rate of 0.1C for 1 cycle. Then, charge-discharge cycling performance testing was conducted at a rate of 1C at -10 °C for 200 cycles. The DCR growth rate was calculated using the formula: DCR growth rate = [(DCR value in the 200th cycle - DCR value in the first cycle)/DCR value in the first cycle] × 100%. The DCR value was calculated using the formula: DCR value = (standing voltage before 1C discharge - voltage after 10s of 1C discharge) /constant current of 1C.

Low-temperature discharge rate test: At 25 °C, charge-discharge cycling was performed at a rate of 0.1C for 1 cycle. Then, charging was performed at a rate of 0.5C to 3.8V, and the charging capacity (i.e., 0.5C charging capacity) was recorded. At -10 °C, constant-current discharge was performed at a rate of 1C to 2.0V, and the discharge capacity (i.e., 1C discharge capacity) was recorded.

The low-temperature discharge rate was calculated using the formula: Low-temperature discharge rate = (1C discharge capacity/0.5C charging capacity) × 100%.

The charge-discharge voltage range was 2 to 3.8 V.

**Table 3 Statistics of electrochemical properties test results of different samples**

| | DCR Growth Rate (-10 °C, %) | Low-Temperature Discharge Rate (%) | 0.1C Discharge Capacity (25 °C, mAh/g) | 1C Discharge Capacity (25 °C, mAh/g) | 1C Cycling Capacity Retention Rate (25 °C, 200 cycles, %) |
|---|---|---|---|---|---|
| Example 1 | 82.5 | 48.8 | 162 | 148 | 98.2 |
| Example 2 | 96.4 | 34.9 | 158 | 136 | 96.8 |
| Example 3 | 88.5 | 40.6 | 160 | 140 | 98.4 |
| Example 4 | 93.6 | 38.4 | 159 | 137 | 98 |
| Example 5 | 98.3 | 34.3 | 158 | 135 | 97.2 |
| Example 6 | 92.9 | 40.5 | 160 | 138 | 98.6 |
| Example 7 | 98.7 | 35.5 | 162 | 138 | 98.8 |
| Example 8 | 97.22 | 34.65 | 162 | 137 | 97.5 |
| Comparative Example 1 | 104.4 | 20.3 | 160 | 133 | 96.5 |
| Comparative Example 2 | 106.3 | 17.5 | 155 | 128 | 96.4 |
| Comparative Example 3 | 107.5 | 17.22 | 154 | 126 | 96.8 |

As shown in Tables 1, 2, and 3, the crystal structure factor A and D(010) of Examples 1 to 8 provided in the present disclosure all meet the standards defined in the present disclosure (4.600 Å⁻⁴ ≤ A ≤ 9.500 Å⁻⁴ and 4 Å ≤ D(010) ≤ 9 Å), while the crystal structure factor A in Comparative Examples 1 to 3 do not meet the standards defined in the present disclosure.

Correspondingly, from the data of Examples 1 to 8 and Comparative Examples 1 to 3, when the cathode materials has similar TD, BET, and Dv(50) but different crystal structure factors A, the electrochemical properties of the materials are different, and the difference in low-temperature electrochemical properties is more significant. Specifically, the larger the value of the crystal structure factor, the better the low-temperature electrochemical properties of the cathode material. Although the normal-temperature electrochemical property is also improved, the change is less significant than that of the low-temperature electrochemical property. The specific reason is that the activation energy required for Li⁺ deintercalation is insufficient at low temperatures, resulting in generally low low-temperature electrochemical property of lithium iron phosphate. The present disclosure adjusts the crystal structure of the lithium iron phosphate cathode material to meet the standards defined in the present disclosure (4.600 Å⁻⁴ ≤ A ≤ 9.500 Å⁻⁴ and 4 Å ≤ D(010) ≤ 9 Å), which shortens the Li⁺ diffusion path of the lithium iron phosphate cathode material, is conducive to improving the Li⁺ deintercalation efficiency and thus enhancing the low-temperature performance. However, adjusting the crystal structure factor has no obvious effect on the normal-temperature electrochemical property, because sufficient energy for Li⁺ deintercalation is available at normal temperatures. From the above electrochemical property test results, when the crystal structure factor A and D(010) of the lithium iron phosphate cathode material meet the ranges defined in the present disclosure (4.600 Å⁻⁴ ≤ A ≤ 9.500 Å⁻⁴ and 4 Å ≤ D(010) ≤ 9 Å), good electrochemical property could be obtained. Even though D(010) in Examples 2, 5, and 8 satisfy 4 Å ≤ D(010) ≤ 9 Å, but do not satisfy the range of 4 Å ≤ D(010) ≤ 6 Å, and the crystallinity C in Example 8 do not satisfy 0.0900 ≤ C ≤ 0.1200 and the unit cell volume V do not satisfy 290 Å³ ≤ V ≤ 292 Å³, these examples still exhibit good electrochemical properties. In contrast, Comparative Examples 1 to 3 do not meet the ranges defined in the present disclosure, and thus their electrochemical properties are significantly inferior to those of the above examples.

Specifically, the crystal structure factors of Comparative Examples 1 and 2 are lower than 4.6 Å⁻⁴, the crystallinity of Comparative Example 1 is lower than 0.09, and the D(010) of Comparative Example 2 is higher than 9 Å, which greatly reduces the low-temperature electrochemical properties of Comparative Examples 1 and 2. However, the normal-temperature electrochemical property of Comparative Example 2 is still at an average level, indicating that crystallinity has a greater impact on the normal-temperature electrochemical property of the cathode material. The crystallinity, unit cell volume, and D(010) of Comparative Example 3 are all within the ranges defined in the present disclosure, but the crystal structure factor is lower than 4.6 Å⁻⁴, which proves that the cathode material does not necessarily have good electrochemical property if only the crystallinity, unit cell volume, and D(010) are within the defined ranges, and the crystal structure factor A must be within the defined range.

In addition, the present disclosure also provided corresponding preparation methods of the aforementioned product examples and product comparative examples.

### Method Example 1

This example provided a method for preparing a lithium iron phosphate cathode material. The product obtained through the method was the product in Example 1 (with a molecular formula of matrix of LiFe_{0.988}Ti_{0.012}PO₄) as described above. The preparation method of this example included the following steps:
(1) Ferrous sulfate heptahydrate and titanium oxysulfate were dissolved in an aqueous solution of 1,2-ethylene glycol to form a metal salt solution; and phosphoric acid was dissolved in water to form a phosphorus source solution.

The molar concentration of metal elements in the metal salt solution was 1.2 M, and the mass percentage concentration of the 1,2-ethylene glycol compound in the aqueous solution of 1,2-ethylene glycol was 13 wt%; and the ferrous sulfate heptahydrate and titanium oxysulfate were fed at a ratio according to n(Fe):n(Ti) = 0.988:0.012.

The concentration of the phosphorus source solution was 2 M, and the ratio of the total molar amount of iron and Ti elements to the molar amount of phosphorus element was 1:1.22.

(2) Lithium carbonate with a particle size of 300-500 meshes was ultrasonically dispersed in the metal salt solution to obtain a dispersion. Then, the phosphorus source solution was added into the dispersion and stirred for dissolution, ammonia water was added to adjust the pH of the solution to 1.8, followed by a reaction under stirring at a reaction temperature of 90 °C for 2 h, and at a stirring speed of 500 rpm. After completion of the reaction, the reaction product was lowered to 20 °C, and subjected to ultrasonication for 30 min to obtain a precursor suspension.

The lithium carbonate was fed based on a ratio of 1:1.05 for the total molar amount of iron and Ti elements to the molar amount of lithium element.

(3) The precursor suspension was subjected to a hydrothermal reaction at a temperature of 200 °C for 3 h and a stirring speed of 180 rpm. After the reaction was completed, the reaction solution was concentrated, cooled to room temperature, and then subjected to solid-liquid separation. The obtained solid was washed with deionized water until clean to obtain a solid precursor.

(4) The solid precursor and glucose were ball-milled using ethanol as a dispersant, wherein the mass ratio of the solid precursor to the carbon source was 1:0.07. Then, the ball-milled mixture was heated for drying, calcined at 600 °C for 6 h in a nitrogen atmosphere, crushed and sieved, to obtain the lithium iron phosphate cathode material.

### Method Example 2

This example provided a method for preparing a lithium iron phosphate cathode material by a carbon reduction method. The product obtained was the product of Example 2 (with a molecular formula of matrix of LiFe_{0.988}Ti_{0.012}PO₄) as described above, which included the following steps:
(1) According to the molar ratio of n(Fe):n(Ti) = 0.988:0.012, a certain amount of ferrous sulfate heptahydrate and titanium oxysulfate were weighed and dissolved in deionized water to prepare a 2 M mixed salt solution; and a certain amount of phosphoric acid was weighed and mixed with water to obtain a phosphoric acid solution with a phosphate ion concentration of 2 M.
(2) The mixed salt solution, the phosphoric acid solution, a 0.6 M hydrogen peroxide solution, and a 2 M ammonia solution were added to the reactor in parallel using a constant flow pump. The flow rates of the mixed salt solution, phosphoric acid solution, and hydrogen peroxide solution were all 120 mL/h. The flow rate of ammonia water was controlled to maintain the pH of the reaction solution at 1.2±0.1. The temperature during the reaction was maintained at 60 °C, the reaction time was 2 hours, and the stirring speed was 600 rpm. After the reaction was completed, the reaction product was filtered and washed with deionized water to obtain an amorphous precipitate which was wet material with a solid content of 85.22%.
(3) The amorphous precipitate was uniformly dispersed in an aging solution for an aging and crystal transformation reaction. After the reaction was completed, the reaction product was filtered and washed with deionized water. The filter residue was subjected to spray drying to obtain a crystalline precipitate.
   The aging solution was a phosphoric acid aqueous solution dissolved with 1,2-ethylene glycol, with a pH of 2 and a 1,2-ethylene glycol concentration of 15 wt%. The feeding ratio of the amorphous precipitate to the aging solution was 1g: 200mL; the conditions for the aging and crystal transformation reaction were: a temperature of 90 °C, a period of time of 2 hours, and a stirring speed of 200 rpm.
(4) The crystalline precipitate was calcined at a temperature of 700 °C with a heating rate of 4 °C/min and a calcination time of 2 hours to obtain a titanium-doped iron phosphate precursor.
(5) The titanium-doped iron phosphate precursor, lithium carbonate, and glucose were mixed with ethanol according to a molar ratio of n(precursor):n(Li):n(glucose) = 1:1.04:0.07. The mixed material was placed in a grinder for grinding for 6 hours, and the obtained slurry was placed in a vacuum oven at 80 °C for drying for 4 hours to obtain a dry material. The dry material was calcined at 750 °C for 9 hours under a nitrogen atmosphere, then crushed and sieved to obtain the lithium iron phosphate cathode material.

### Method Examples 3-4 and 6-7

The preparation methods of Method Examples 3-4 and 6-7 were the same as those of Example 1, except that the parameters in the preparation process were different. The products prepared in Method Examples 3-4 and 6-7 were the products of the Examples 3-4 and 6-7 as described above, respectively. Specifically, the preparation parameters were shown in Table 4.

**Table 4 Statistics of preparation parameters**

| Parameter | Example | | | | |
|---|---|---|---|---|---|
| | Example 1 | Example 3 | Example 4 | Example 6 | Example 7 |
| Iron source | Ferrous sulfate heptahydrate | Ferrous sulfate heptahydrate | Ferrous sulfate heptahydrate | Ferrous chloride | Ferrous nitrate |
| M source | titanium oxysulfate | / | / | Chromium sulphate | Manganese sulfate |
| Metal salt concentration | 1.2 M | 1.2 M | 1.2 M | 0.8 M | 1.5 M |
| n(Fe):n(M) | 0.988:0.012 | / | / | 0.986:0.014 | 0.989:0.011 |
| Ethylene glycol compounds | 1,2-ethylene glycol | Crotonate | Sodium crotonate | 3,4-Dihydroxy-5-methyl-2-furanone | Squaric acid |
| Ethylene glycol concentration | 13 wt% | 20 wt% | 10 wt% | 11 wt% | 5 wt% |
| Phosphorus source | Phosphoric acid | Sodium dihydrogenpho sphate | Sodium dihydrogenpho sphate | Phosphoric acid | Phosphoric acid |
| Phosphorus source concentration | 2 M | 2 M | 2 M | 0.85 M | 3 M |
| n(Fe+M):n(P) | 1:1.22 | 1:1.1 | 1:1.1 | 1:1.05 | 1:1.5 |
| n(Fe+M):n(Li) | 1:1.05 | 1:1.01 | 1:1.01 | 1:1.05 | 1:1.01 |
| pH | 1.8 | 2 | 2 | 2.5 | 1.1 |
| Stirring reaction | 90 °C/2 h /500 rpm | 80 °C/4 h /300 rpm | 80 °C/4 h /300 rpm | 90 °C/4 h /800 rpm | 80 °C/4 h /300 rpm |
| Hydrothermal reaction | 200 °C/3 h /180 rpm | 200 °C/2 h /100 rpm | 200 °C/2 h /100 rpm | 160 °C/2 h /300 rpm | 200 °C/1 h /100rpm |
| Carbon source | Glucose | Sucrose | Sucrose | Starch | Starch |
| A Source and/or D | / | / | / | / | NaF |
| Source | | | | | |
| Mixing method | Ball milling + heat drying | Wet grinding + spray drying | Wet grinding + spray drying | Ball milling + heat drying | Ball milling + heat drying |
| Calcination | 600 °C/6h | 650 °C/7h | 650 °C/7h | 650 °C/4h | 550 °C/8h |
| Mass ratio of precursor to carbon source | 1:0.07 | 1:0.07 | 1:0.07 | 1:0.04 | 1:0.1 |

### Method Example 5

This example provided a method for preparing a lithium iron phosphate cathode material using a carbon reduction method. The prepared product was the product of Example 5 (with a molecular formula of matrix of LiFePO₄) was described above. The method included the following steps:
(1) Ferrous sulfate heptahydrate was weighed and dissolved in water to prepare a 2 M salt solution; a certain amount of phosphoric acid was weighed and mixed with water to obtain a phosphoric acid solution having a phosphate ion concentration of 2 M.
(2) The salt solution, the phosphoric acid solution, a 0.6 M hydrogen peroxide, and a 2 M ammonia water were co-currently added into the reaction kettle using a constant flow pump. The flow rates of the salt solution, the phosphoric acid solution, and the hydrogen peroxide were all 120 mL/h, and the flow rate of ammonia water was controlled to maintain the pH of the reaction solution at 1.2±0.1. The temperature during the reaction was maintained at 60 °C, the reaction time was 2 hours, and the stirring speed was 600 rpm. After the reaction was completed, the reaction product was filtered and washed with deionized water to obtain an amorphous precipitate which was wet material with a solid content of 89.57%.
(3) The amorphous precipitate was uniformly dispersed in an aging solution for an aging and crystal transformation reaction. After the reaction was completed, the reaction product was filtered and washed with deionized water. The filter residue was subjected to spray drying to obtain a crystalline precipitate.
   The aging solution was a phosphoric acid aqueous solution dissolved with 1,2-ethylene glycol, with a pH of 2 and a 1,2-ethylene glycol concentration of 20 wt%. The feeding ratio of the amorphous precipitate to the aging solution was 1g: 200mL; the conditions for the aging and crystal transformation reaction were: a temperature of 90 °C, a period of time of 2 hours, and a stirring speed of 200 rpm.
(4) The crystalline precipitate was calcined at a temperature of 700 °C with a heating rate of 4 °C/min and a calcination time of 2 hours to obtain an iron phosphate precursor.
(5) The iron phosphate precursor, lithium carbonate, and glucose were mixed with ethanol according to a molar ratio of n(precursor):n(Li):n(glucose) = 1:1.04:0.06. The mixed material was placed in a grinder for grinding for 6 hours, and the obtained slurry was placed in a vacuum oven at 80 °C for drying for 4 hours to obtain a dry material. The dry material was calcined at 750 °C for 9 hours under a nitrogen atmosphere, then crushed and sieved to obtain the lithium iron phosphate cathode material.

### Method Example 8

This example provided a method for preparing a lithium iron phosphate cathode material using a carbon reduction method. The product obtained by the method was the product of Example 8 (with a molecular formula of matrix of LiFePO₄) was described above. The method included the following steps:
The method was different from Example 5 in that: in the step (3), squaric acid was used instead of 1,2-ethylene glycol; in the step (4), the calcination temperature was 600 °C, and the heating rate was 2 °C/min.

### Method Comparative Example 1

This comparative example provided a method for preparing a lithium iron phosphate cathode material by a solvothermal reaction. The prepared product was the product of Comparative Example 1 (with a molecular formula of matrix of LiFePO₄) as described above. The method included the following steps:
(1) Ferrous sulfate heptahydrate was weighed and dissolved in ethylene glycol to prepare an iron salt solution with a concentration of 0.1 g/mL; lithium hydroxide monohydrate was weighed and dissolved in ethylene glycol to prepare a lithium source solution with a concentration of 0.04 g/mL.
(2) 2.8 mL of 85 wt% phosphoric acid was added to 90 mL of the lithium source solution for reaction under stirring for 30 minutes. Then, the iron salt solution was added, and stirring was continued for 30 minutes to obtain a precursor suspension.
(3) The precursor suspension was placed in an oven at 180 °C for a solvothermal reaction for 10 hours, and subjected to solid-liquid separation, to obtain a solid. The obtained solid was washed and dried to obtain lithium iron phosphate (LiFePO₄).
(4) The lithium iron phosphate (LiFePO₄) and glucose were mixed at a mass ratio of 1:0.07. The mixture was ball-milled with ethanol as a dispersant, dried by heating, calcined at 600 °C for 6 hours under a nitrogen atmosphere, crushed and sieved, to obtain the lithium iron phosphate cathode material.

### Method Comparative Example 2

This comparative example provided a method for preparing a lithium iron phosphate cathode material by a solid-phase synthesis method. The prepared product was the product of Comparative Example 2 (with a molecular formula of matrix of LiFePO₄) as described above. The method included the following steps:
(1) Lithium phosphate, ferrous oxalate dihydrate, and ammonium hydrogen phosphate were weighed according to a stoichiometric ratio of 1:3:3 and mixed, the mixture was ball-milled with ethanol as a dispersant for 6 hours, and dried to obtain a precursor. The precursor was calcined at 500 °C for 12 hours, cooled, crushed, and sieved to obtain lithium iron phosphate (LiFePO₄).
(2) The lithium iron phosphate (LiFePO₄) and glucose were mixed at a mass ratio of 1:0.07. The mixture was ball-milled with ethanol as a dispersant, dried by heating, calcined at 600 °C for 2 hours under a nitrogen atmosphere, crushed and sieved, to obtain the lithium iron phosphate cathode material.

### Method Comparative Example 3

This comparative example provided a method for preparing a lithium iron phosphate cathode material by a solvothermal reaction. The prepared product was the product of Comparative Example 3 (with a molecular formula of matrix of LiFePO₄) as described above. The method included the following steps:
(1) 1,2-ethylene glycol was dissolved in ethylene glycol to prepare a mixed solvent having a mass percentage concentration of 10% of 1,2-ethylene glycol; ferrous sulfate heptahydrate was weighed and dissolved in the above mixed solvent to prepare an iron salt solution with a concentration of 0.1 g/mL; and lithium hydroxide monohydrate was weighed and dissolved in the above mixed solvent to prepare a lithium source solution with a concentration of 0.04 g/mL.
(2) 2.8 mL of 85 wt% phosphoric acid was added to 90 mL of the lithium source solution for reaction under stirring for 30 minutes. Then, the iron salt solution was added, and stirring was continued for 30 minutes to obtain a precursor suspension.
(3) The precursor suspension was placed in an oven at 200 °C for a solvothermal reaction for 10 hours, and subjected to solid-liquid separation to obtain a solid. The obtained solid was washed and dried to obtain lithium iron phosphate (LiFePO₄).
(4) The lithium iron phosphate (LiFePO₄) and glucose were mixed at a mass ratio of 1:0.07. The mixture was ball-milled with ethanol as a dispersant, dried by heating, calcined at 600 °C for 6 hours under a nitrogen atmosphere, crushed and sieved, to obtain the lithium iron phosphate cathode material.

Based on the products and preparation methods disclosed herein, as well as the product properties in Tables 1 to 3 above, it can be seen that Example 1 and Example 2 have the same chemical composition. However, due to differences in their preparation methods, the D(010) of Example 1 is within the range of 4 Å - 6 Å, while that of Example 2 is not within the range of 4 Å - 6 Å. Correspondingly, the crystal structure factor value of Example 2 is lower than that of Example 1. Similarly, among Examples 3 to 5, the crystal structure factor values of Examples 3 and 4 (prepared by the method disclosed herein) are higher than that of Example 5. These results fully demonstrate that the preparation method provided in the present disclosure can produce lithium iron phosphate cathode materials with D(010) in the range of 4 Å - 6 Å and high crystallinity. Among them, the lithium iron phosphate cathode materials whose D(010) are not within the range of 4 Å - 6 Å but still satisfy 4.600 Å ≤ A ≤ 9.500 Å also exhibite good electrochemical properties. Therefore, it is not necessary to use the preparation method disclosed herein to prepare products that can solve the technical problem.

In addition, the present disclosure further provided Method Examples 9-16 and Method Comparative Examples 4-5. These examples (Method Examples 9-16 and Method Comparative Examples 4-5) involved single-factor variable adjustments to one parameter of Method Example 1.

Specifically, the specific steps of Method Examples 9-16 and Method Comparative Examples 4-5 were as follows:

### Method Example 9

This example was substantially the same as Method Example 1, with the only difference being that the mass percentage concentration of the 1,2-ethylene glycol compound in the aqueous solution of 1,2-ethylene glycol in this example was 5 wt%.

### Method Example 10

This example was substantially the same as Method Example 1, with the only difference being that the mass percentage concentration of the 1,2-ethylene glycol compound in the aqueous solution of 1,2-ethylene glycol in this example was 20 wt%.

### Method Example 11

This example was substantially the same as Method Example 1, with the only difference being that the ethylene glycol compound in this example was squaric acid.

### Method Example 12

This example was substantially the same as Method Example 1, with the only difference being that the ethylene glycol compound in this example was sodium crotonate.

### Method Example 13

This example was substantially the same as Method Example 1, with the only difference being that the pH of the reaction under stirring in this example was 1.

### Method Example 14

This example was substantially the same as Method Example 1, with the only difference being that the pH of the reaction under stirring in this example was 2.5.

### Method Example 15

This example was substantially the same as Method Example 1, with the only difference being that the rotation speed of the reaction under stirring in this example was 300 rpm.

### Method Example 16

This example was substantially the same as Method Example 1, with the only difference being that the rotation speed of the reaction under stirring in this example was 800 rpm.

### Method Comparative Example 4

This comparative example was substantially the same as Example 1, with the only difference being that, in this comparative example, 1,2-ethylene glycol in Example 1 was replaced by ethylene glycol.

### Method Comparative Example 5

This comparative example was substantially the same as Example 1, with the only difference being that, in this comparative example, the lithium carbonate in Example 1 was replaced by lithium hydroxide.

Property tests were conducted on the lithium iron phosphate cathode materials prepared in Method Examples 9 to 16 and Method Comparative Examples 4 to 5. The test results were shown in Table 5 and Table 6.

**Table 5 Statistics of crystal structure test results of different samples**

| | C | V, Å³ | D(010), Å | A, Å⁻⁴ |
|---|---|---|---|---|
| Method Example 9 | 0.1101 | 290.2 | 6.24 | 6.0800 |
| Method Example 10 | 0.1155 | 290.22 | 4.34 | 9.1699 |
| Method Example 11 | 0.1129 | 290.21 | 4.07 | 9.5584 |
| Method Example 12 | 0.1147 | 290.23 | 5.58 | 7.0825 |
| Method Example 13 | 0.1123 | 290.21 | 4.11 | 9.4151 |
| Method Example 14 | 0.1148 | 290.2 | 4.55 | 8.6943 |
| Method Example 15 | 0.1153 | 290.22 | 4.41 | 9.0087 |
| Method Example 16 | 0.1143 | 290.23 | 4.33 | 9.0953 |
| Method Comparative Example 4 | 0.1150 | 290.24 | 9.04 | 4.3830 |
| Method Comparative Example 5 | 0.0886 | 291.22 | 6.14 | 4.9550 |

**Table 6 Statistics of composition and property test results of different samples**

| | Chemical Formula | Carbon Content (wt%) | TD (g/cm³) | BET (m²/g) | Dv (50) (µm) |
|---|---|---|---|---|---|
| Method Example 9 | LiFe_{0.988}Ti_{0.012}PO₄ | 1.28 | 0.94 | 12.9 | 1.16 |
| Method Example 10 | LiFe_{0.988}Ti_{0.012}PO₄ | 1.36 | 0.9 | 13.3 | 1.08 |
| Method Example 11 | LiFe_{0.988}Ti_{0.012}PO₄ | 1.34 | 0.89 | 13.2 | 0.95 |
| Method Example 12 | LiFe_{0.988}Ti_{0.012}PO₄ | 1.32 | 0.9 | 12.8 | 1.17 |
| Method Example 13 | LiFe_{0.988}Ti_{0.012}PO₄ | 1.33 | 0.95 | 12.6 | 1.21 |
| Method Example 14 | LiFe_{0.988}Ti_{0.012}PO₄ | 1.3 | 0.97 | 13.2 | 1.1 |
| Method Example 15 | LiFe_{0.988}Ti_{0.012}PO₄ | 1.35 | 0.95 | 12.8 | 1.24 |
| Method Example 16 | LiFe_{0.988}Ti_{0.012}PO₄ | 1.32 | 0.9 | 13.3 | 1.05 |
| Method Comparative Example 4 | LiFe_{0.988}Ti_{0.012}PO₄ | 1.3 | 0.9 | 12.6 | 1.28 |
| Method Comparative | LiFe_{0.988}Ti_{0.012}PO₄ | 1.29 | 0.88 | 11.8 | 1.18 |
| Example 5 | | | | | |

As shown in the above tables, Method Examples 9 to 16 and Method Comparative Examples 4 and 5 were based on single-factor variable analysis of Method Example 1.As can be seen from the results of Method Examples 9 to 16 and Method Comparative Examples 4 and 5, the crystal structure of cathode materials with the same chemical composition can be regulated by the preparation method.

Specifically, in Method Examples 9 to 12, the amount and type of the ethylene glycol compound added are changed. The results show that the amount and type of the ethylene glycol compound added have an impact on the crystal structure factor of lithium iron phosphate. The crystal structure factor shows a trend of increasing and then decreasing with the increase in the amount of ethylene glycol compound added. The excessive addition of ethylene glycol compound reduces the concentration and saturation of the free Fe²⁺ in the reaction solution, thereby restricting the nucleation of lithium iron phosphate and decreasing crystallinity. If the amount added was insufficient, it was difficult to play a role in crystal plane adjustment, leading to an increase in the crystal structure factor.

In Method Examples 13 to 16, the pH and stirring speed during the reaction are changed. The results show that, the pH and stirring speed during the reaction have an impact on the crystal structure factor of lithium iron phosphate. The crystal structure factor shows a trend of increasing and then decreasing with the increase in the pH, and a trend of increasing and then decreasing with the increase in the stirring speed. The pH value and stirring speed are closely related to the dissolution rate of lithium carbonate (i.e., the production of carbon dioxide gas). If the rate of carbon dioxide production is too fast, the distribution of various elements will be uneven, and nucleation defects will easily occur, thus affecting the crystallinity. If the rate of carbon dioxide production is too slow, the local supersaturation is low, and the nucleation is inhibited.

In Method Comparative Example 4, ethylene glycol is used instead of ethylene glycol compound. The results show that the ethylene glycol compound is more effective than ethylene glycol in reducing the D(010) of lithium iron phosphate, and also increases the crystallinity of lithium iron phosphate to a certain extent. Thus, the crystal structure factor of the lithium iron phosphate prepared in the examples is higher than that prepared in Method Comparative Example 4. The reason is that the hydroxyl groups in ethylene glycol compound are connected via unsaturated carbons, which significantly enhances the chelating ability with Fe²⁺. Thus, the regulation effect on the crystal plane is greatly improved, and the crystal growth rate is slowed down, which is conducive to improving crystallinity.

In Method Comparative Example 5, lithium hydroxide is used as the lithium source. Compared with Example 1 in which lithium carbonate is used as the lithium source, lithium carbonate produces carbon dioxide bubbles in an acidic environment, which significantly promotes the crystallinity of lithium iron phosphate and also reduces the D(010) of lithium iron phosphate to a certain extent. Therefore, the crystal structure factor of the lithium iron phosphate prepared in Method Example 1 is larger than that of the product prepared in Method Comparative Example 5. The reason is that the rupture of micro-bubbles causes local supersaturation, promoting the primary nucleation of lithium iron phosphate precipitation. As a result, the prepared lithium iron phosphate exhibits better crystallization property under the same hydrothermal reaction conditions.

In summary, the present disclosure provides a lithium iron phosphate cathode material, whose crystal structure factor A satisfies 4.600 Å⁻⁴ ≤ A ≤ 9.500 Å⁻⁴ and whose grain size D(010) satisfies 4 Å ≤ D(010) ≤ 9 Å. The lithium iron phosphate cathode material within the above ranges exhibits excellent low-temperature electrochemical properties. The crystal structure factor comprehensively evaluates three indicators of the lithium iron phosphate cathode material: crystallinity C, unit cell volume V, and grain size D(010) of the crystal plane (010). Among them, the higher the crystallinity, the higher the lithium ion diffusion rate is and the better the conductivity is. The smaller the unit cell volume, the shorter the Li⁺ deintercalation channel is, which facilitates Li⁺ hopping and improves the electrical conductivity and cycling performance of the material. The smaller D(010), the more conducive it is to shortening the lithium ion diffusion channel and improving electrical conductivity. Furthermore, the preparation method of the lithium iron phosphate cathode material provided in the present disclosure is merely an exemplary preparation method. In the preparation method disclosed herein, lithium carbonate is used as a lithium source, mixed with a divalent iron source, a phosphorus source, and an ethylene glycol compound, and stirred for reaction to form a precursor suspension. The reaction is carried out at a relatively low temperature (80-90 °C) and a low pH value (1-2.5). The phosphorus source and the divalent iron ions form an unstable ferrous phosphate precipitate (precipitation and dissolution occur simultaneously). Simultaneously, the lithium carbonate reacts with the acid to release Li⁺ and carbon dioxide gas, thereby forming tiny bubbles. The bubble bursting can lead to local supersaturation, promoting the primary nucleation of lithium iron phosphate precipitation, thereby shortening the hydrothermal reaction time and lowering the hydrothermal reaction temperature. The ethylene glycol compound acts as both an antioxidant and a chelating agent for Fe²⁺, preventing Fe²⁺ from being oxidized to Fe³⁺ during the reaction under stirring. During the hydrothermal reaction, the chelating effect of the ethylene glycol compound on Fe²⁺ can, on the one hand, reduce the diffusion rate of Fe²⁺, inhibit the orderly arrangement of ions, and thus slow the crystal growth rate, resulting in lithium iron phosphate crystals with higher crystallinity. On the other hand, the ethylene glycol compound combines with Fe²⁺ arranged on the (010) crystal plane of lithium iron phosphate and is adsorbed on the crystal plane, inhibiting the growth of the crystal plane, thereby obtaining lithium iron phosphate crystals with a (010) crystal plane orientation. Compared with saturated polyols (such as ethylene glycol in traditional methods), the ethylene glycol compound has a stronger chelating effect on Fe²⁺ because the hydroxyl group is connected to the unsaturated carbon atom, which has a more significant effect on slowing down the crystal growth rate, thereby greatly improving the crystallinity. In addition, since the water solubility of the ethylene glycol compound is lower than that of saturated polyols such as ethylene glycol, it is prone to chelate with Fe²⁺ and thus adsorb on the crystal surface to achieve the effect of regulating the crystal morphology. This method can prepare lithium iron phosphate cathode materials with D(010) in the range of 4 Å - 6 Å and high crystallinity. Among them, the lithium iron phosphate cathode material whose D(010) is not in the range of 4 Å - 6 Å but satisfies 4.600 Å⁻⁴ ≤ A ≤ 9.500 Å⁻⁴ also has good electrochemical properties. Therefore, it is not necessary to use the preparation method provided by the present disclosure to prepare a product that can solve the technical problem.

The foregoing description merely describes the optional embodiments of the present disclosure and is not intended to limit the present disclosure. For those skilled in the art, various modifications and variations can be made to the present disclosure. Any modification, equivalent replacement, improvement, etc., made within the spirit and principle of the present disclosure shall fall within the protection scope of the present disclosure.

### Industrial Applicability

The present disclosure provides a lithium iron phosphate cathode material, whose crystal structure factor A satisfies 4.600 Å⁻⁴ ≤ A ≤ 9.500 Å⁻⁴ and whose grain size D(010) satisfies 4 Å ≤ D(010) ≤ 9 Å. The lithium iron phosphate cathode material within the above ranges exhibits excellent low-temperature electrochemical properties. The crystal structure factor comprehensively evaluates three indicators of the lithium iron phosphate cathode material: crystallinity C, unit cell volume V, and grain size D(010) of the crystal plane (010). Among them, the higher the crystallinity C, the fewer internal defects in the material and the higher the lithium ion diffusion rate; the smaller the unit cell volume, the shorter the lithium ion deintercalation channel is, and the easier the lithium ion to transition, which is beneficial to improving the cycle performance; the smaller D(010) is, the more conducive it is to shortening the diffusion channel of lithium ions and improving the charge-discharge capacity and rate performance. Although crystallinity C, unit cell volume V, and grain size D(010) each affect the performance of the lithium iron phosphate cathode material, it is practically difficult to obtain a cathode material with optimal performance in all three aspects. Therefore, the present disclosure provides a crystal structure factor A to comprehensively evaluate the three aspects of the lithium iron phosphate cathode material. The lithium iron phosphate cathode material that satisfies 4.600 Å⁻⁴ ≤ A ≤ 9.500 Å⁻⁴ and 4 Å ≤ D(010) ≤ 9 Å simultaneously exhibits excellent low-temperature electrochemical properties. The method for preparing the lithium iron phosphate cathode material provided in the present disclosure can produce a lithium iron phosphate cathode material with D(010) in the range of 4 Å - 6 Å and high crystallinity.

## Claims

1. A lithium iron phosphate cathode material, comprising a matrix and a carbon coating layer coated on a surface of the matrix, wherein a crystal structure factor A of the lithium iron phosphate cathode material satisfies 4.600 Å⁻⁴ ≤ A ≤ 9.500 Å⁻⁴, and a calculation formula of the crystal structure factor A is: $A = \frac{C \times {10}^{5}}{D \left(010\right) \times V} ,$
wherein C is a crystallinity of the lithium iron phosphate cathode material, and the crystallinity is measured by a ratio of a XRD diffraction peak intensity of a crystal plane (311) to an integral area of a diffraction peak;
V is a unit cell volume of the lithium iron phosphate cathode material in a unit of Å³; and
*D*(010) is a grain size of a crystal plane *D*(010) of the lithium iron phosphate cathode material in a unit of Å, with a value satisfying 4 Å ≤ D(010) ≤ 9 Å.

2. The lithium iron phosphate cathode material according to claim 1, wherein the lithium iron phosphate cathode material satisfies at least one of the following features (1) to (3):
feature (1): a value of *D*(010) satisfies 4 Å ≤ D(010) ≤ 6 Å;
feature (2): a value of C satisfies 0.0900 ≤ C ≤ 0.1200; or
feature (3): a value of V satisfies 290 Å³ ≤ V ≤ 292 Å³.

3. The lithium iron phosphate cathode material according to any one of claims 1 to 2, wherein a general formula of the matrix is as follows: Li₁₋ₓAₓFe_{1-y}M_{y}(PO_{4-z})D_{z}, wherein A is at least one selected from the group consisting of Na and Mg; M is at least one selected from the group consisting of Al, Ni, Co, Mn, Ti, La, Ce, Cr, Mo, Ca, Ga, V, Nb, Zr, In, Zn and Y; and D is at least one selected from the group consisting of F, S, N and Cl; and wherein 0 ≤ x ≤ 0.1, 0 ≤ y ≤ 0.1, and 0 ≤ z ≤ 0.1.

4. The lithium iron phosphate cathode material according to any one of claims 1 to 3, wherein a mass of the carbon coating layer is 0.5%-5% of a mass of the lithium iron phosphate cathode material.

5. A method for preparing the lithium iron phosphate cathode material according to any one of claims 1 to 4, comprising:
stirring a mixture of lithium carbonate, a divalent iron source, a phosphorus source, and an ethylene glycol compound solution for reaction to obtain a precursor suspension;
subjecting the precursor suspension to a hydrothermal reaction and solid-liquid separation to obtain a solid precursor; and
mixing the solid precursor with a carbon source, drying a resulting mixture, and calcining a dried mixture under an inert atmosphere to obtain the lithium iron phosphate cathode material.

6. The method for preparing the lithium iron phosphate cathode material according to claim 5, wherein a process of preparing the precursor suspension comprises at least one of the features (4) to (9):
feature (4): the divalent iron source is at least one selected from the group consisting of ferrous sulfate, ferrous chloride, ferrous nitrate, ferrous oxalate and ferrous acetate;
feature (5): the phosphorus source is at least one selected from the group consisting of phosphoric acid, sodium dihydrogen phosphate, sodium monohydrogen phosphate, ammonium dihydrogen phosphate and ammonium monohydrogen phosphate;
feature (6): a mass percentage of the ethylene glycol compound in the ethylene glycol compound solution is 5% to 20%;
feature (7): the ethylene glycol compound is a water-soluble compound having an ethylene glycol structure, and the ethylene glycol compound is at least one selected from the group consisting of 1,2-ethylene glycol, squaric acid, crotonic acid, sodium crotonate, 2,3-dihydroxycyclopent-2-ene-1-one, 2,3-dihydroxy-4-(hydroxymethyl)cyclopent-2-ene-1-one and 3,4-dihydroxy-5-methyl-2-furanone;
feature (8): a pH of a solution in the reaction under stirring is 1-2.5, a reaction temperature is 80-90 °C, a reaction time is 1-4 h, and a stirring speed is 300-800 rpm; or
feature (9): after the reaction under stirring is completed, the method further comprising cooling to 10-25 °C and stirring until no bubbles are generated.

7. The method for preparing the lithium iron phosphate cathode material according to any one of claims 5 to 6, wherein an M source is further added during a preparation of the mixture, and the method comprises at least one of the features (10) to (13):
feature (10): the divalent iron source and the M source are dissolved in the ethylene glycol compound solution to form a metal salt solution, and the phosphorus source is dissolved in water to form a phosphorus source solution; the lithium carbonate is dispersed in the metal salt solution to obtain a dispersion, and then added with the phosphorus source solution to obtain the mixture; wherein a molar concentration of a metal element in the metal salt solution is 0.8 M to 1.5 M, and a molar concentration of the phosphorus source in the phosphorus source solution is 0.85 M to 3 M;
feature (11): a ratio of a total molar amount of the divalent iron source and the M source to a molar amount of the phosphorus source is 1:1.05-1.5;
feature (12): a ratio of the total molar amount of the divalent iron source and the M source to a molar amount of a lithium element in the lithium carbonate is 1:1.01 -1.1; or
feature (13): the M source comprises a water-soluble salt of at least one element selected from the group consisting of Al, Ni, Co, Mn, Ti, La, Ce, Cr, Mo, Ca, Ga, V, Nb, Zr, In, Zn and Y.

8. The method for preparing the lithium iron phosphate cathode material according to any one of claims 5 to 7, wherein the conditions of the hydrothermal reaction during a preparation of the solid precursor are as follows: the temperature is 160-200 °C, a period of time is 1-3 h, and a stirring speed is 100-300 rpm.

9. The method for preparing the lithium iron phosphate cathode material according to any one of claims 5 to 8, wherein the step of mixing the solid precursor with the carbon source, drying the resulting mixture, and calcining the dried mixture under the inert atmosphere comprises at least one of the following features (14) to (17):
feature (14): a mass ratio of the solid precursor to the carbon source is 1:0.04 -0.1;
feature (15): the carbon source is at least one selected from the group consisting of glucose, starch, phenolic resin, sucrose, cellulose, polyethylene glycol and citric acid;
feature (16): the mixing further comprising adding an A source and/or a D source, wherein the A source is at least one selected from the group consisting of magnesium fluoride, sodium fluoride, sodium chloride and sodium sulfide; the D source is at least one selected from the group consisting of potassium fluoride, magnesium fluoride, sodium fluoride, ammonium fluoride, lithium fluoride, melamine, amino acid, trithiocyanuric acid, thiourea, elemental sulfur, sodium sulfide, ammonium sulfide, sodium chloride, ammonium chloride, lithium chloride and urea; or
feature (17): the calcining comprises calcining at 550-650 °C for 4-8 hours.

10. A lithium-ion battery, comprising the lithium iron phosphate cathode material according to any one of claims 1 to 4 or the lithium iron phosphate cathode material prepared by the method for preparing the lithium iron phosphate cathode material according to any one of claims 5 to 9.
